# EUROPEAN PATENT APPLICATION

(11) **EP 2 339 418 A1**
(43) Date of publication of application: **29.06.2011**
(21) Application number: 09179989.0
(22) Date of filing: 18.12.2009
(51) Int. Cl.: G05B 19/418

(54) **Method and device for enhancing production facility performances**

(71) Applicant: SIEMENS AKTIENGESELLSCHAFT, 80333 München (DE)
(72) Inventor: Colombelli, Francesco, 16138 Genova (IT); Comes, Daniele, 16148 Genova (IT)
(74) Representative: Fischer, Michael

(57) **Abstract**

System for improving the efficiency of a production facility, the system comprising:
- a production facility modeler (11) designed for modeling said production facility into a virtual production facility;
- a production facility simulator (12) for simulating at least one working of the production facility from a virtual working of the virtual production facility;
- means for collecting (13) at least one data related to said virtual working;
- means for computing (14) at least one OEE KPI from said data.

## Description

The present invention relates generally to the enhancement of manufacturing processes, and more particularly to a method and a device for improving the efficiency of a production facility.

For manufacturing companies, a correct and efficient use of production facility equipments is crucial for obtaining an optimum usage of said production facility, i.e. a maximal output with minimal costs. The measuring of efficiency and productivity of equipments (i.e. manufacturing units, machines, manufacturing cells, assembly lines, ...) is usually used for improving the operability of each equipment of the production facility.

One method for estimating such efficiency is based on calculating an "Overall Equipment Effectiveness" (OEE). The OEE is a hierarchy of metrics that focus on how effectively a manufacturing operation is utilized. OEE is frequently used as a key performance indicator (KPI) for monitoring and improving the efficiency of manufacturing processes. In particular, OEE is used a key metric in Total Productive Maintenance (TPM), and it gives a consistent way to measure the effectiveness of TPM by providing an overall framework for measuring production efficiency in Lean Manufacturing programs. In other words, an OEE value gives an idea of how well a production facility is running compared to targeted production facility outputs.

OEE breaks the performance or efficiency of an equipment of a production facility into three separate but measurable components: Availability, Performance, and Quality. Each component points to an aspect of a process of the equipment that can be targeted for improvement.

The Availability component of the OEE represents a percentage of scheduled time that an operation is available to operate on said equipment. The Availability component is a pure measurement of Uptime that is designed for excluding effects of Quality, Performance, and Scheduled Downtime Events.

The Performance component of the OEE represents a speed at which the production facility runs as a percentage of a designed speed. The Performance component is a pure measurement of speed that is designed for excluding effects of Quality and Availability.

The Quality component of the OEE represents a Good Units produced as a percentage of a Total Units Started. The Quality is a pure measurement of Process Yield that is designed for excluding effects of Availability and Performance.

OEE may be applied to any individual Work Center, or rolled up to Department or Plant levels. OEE also allows to drill down for very specific analysis of equipment or production facility, such as a particular Part Number, a Shift, or any of several other parameters. OEE is thus capable of breaking down the effectiveness of a production facility to its equipments, and/or the effectiveness of an equipment process (or production facility process) to its subprocesses.

OEE results are usually stated in a generic form that allows comparison between manufacturing equipments in different production facilities. OEE quantifies for example how well a manufacturing unit performs relative to its designed capacity, during the periods when it is scheduled to run. The OEE is capable of collecting information related to a history of the effectiveness, but is not capable of providing any information on a future efficiency of a process or equipment or whole production facility.

Indeed, from a temporal point of view, first of all, a production facility is built, then an OEE software is used in order to compute OEE KPIs by collecting data in a relational database production facility, while running said production facility. Finally, OEE results are examined in order to recognize bottleneck equipment and performance losses. From the examination of the OEE results, a production facility engineer can then apply some corrections on parameters of the production facility for improving production performances. Said parameters are in particular running parameters of the production facility, equipment and production facility configuration parameters, and they take also into account a modification or a replacement of any equipment or part of the production facility. Resulting corrections are for example a substitution of an equipment of the production facility by another equipment, a change of an obsolete equipment with a newer and faster one, an addition of an equipment in order to parallelize production, a change of working parameters of an equipment. Once the correction has been done, the production facility is run again, and the OEE software is used to compute new OEE KPIs that result from said correction. Consequently, the production facility is improved according to an iterative process.

The main issue in this iterative process is to guess the right correction of the production facility parameters for optimizing the performance and correcting performance problems. Production facility engineers cannot a priori know if a correction will have a positive or negative impact on the performance: they have to try and to test. This means that other data must always be acquired, elaborated and compared with the previous one, which is a time consuming and expensive process that does even not always lead to an expected result.

It is therefore an objective of the present invention to provide a method and a system for improving the efficiency of a production facility that avoid time losses and expenses in iterative corrections of the production facility, said method and system allowing in particular to forecast an effect of a correction of a production facility parameter on the production facility efficiency.

This objective is achieved according to the present invention with respect to the method by a method for improving the efficiency of a production facility, the method comprising the steps of:
- modeling a production facility into a virtual production facility;
- simulating at least one working of the production facility from a virtual working of the virtual production facility;
- collecting at least one data related to said virtual working, said data being in particular worked or designed for an OEE system;
- computing at least one OEE KPI from said data, in particular by means of said OEE system.

This objective is achieved according to the present invention with respect to the system by a system for improving the efficiency of a production facility, the system comprising:
- a production facility modeler designed for modeling said production facility into a virtual production facility;
- a production facility simulator for simulating at least one working of the production facility from a virtual working of the virtual production facility;
- means for collecting at least one data related to said virtual working, said means being in particular capable of working out said data in order to provide worked data compatible with an OEE system;
- means for computing at least one OEE KPI from said data, said means for computing being in particular said OEE system.

In other words, the present invention comprises a production facility modeler and a production facility simulator, in particular coupled together, that are capable of elaborating production facility simulation data in order to compute OEE KPIs, i.e. OEE, Availability, Performance and Quality. In particular, the means for collecting and the means for computing might be comprised in a single OEE system. Advantageously, the present invention may aid production facility engineers during design phases of a new production facility or of a new equipment that would be inserted in an existing production facility.

In addition, the system according to the invention is characterized in that the production facility modeler is capable of modeling a production facility equipment into a virtual equipment of the virtual production facility. Consequently, the production facility modeler is capable of producing a virtual model of each equipment comprised in a production facility, so that any equipment of a production facility, in particular an existing production facility, is modeled into a virtual equipment designed for being comprised in the virtual production facility. Off course, interactions between each virtual equipment and characteristics of each virtual equipment mimic interactions between each real equipment and characteristics of each real equipment in order to obtain, at the end, a virtual production facility capable of behaving as a real production facility.

In particular, the production facility simulator is capable of simulating a working of a production facility equipment from a virtual working of said virtual equipment. It means, that at least one working of an equipment, i.e. a real equipment, might be simulated by said production facility simulator from a virtual working of said virtual equipment, i.e. from a simulation of the working of the real equipment. In particular, the production facility simulator is capable of taking into account working interactions between each virtual equipment and working characteristics of each virtual equipment, as subunit of the virtual production facility.

The simulation of the production facility by the production facility simulator is in particular capable of returning simulation data compatible with an OEE system. In fact, the means for collecting are capable of collecting at least one of said data related to the virtual working of said virtual equipment. Notably, they are advantageously capable of working out said data for returning, as output from said data, worked data compatible with an existing OEE system, notably if the simulation does not give rise to OEE compatible data.

Advantageously, a correction of at least one parameter of the virtual production facility according to OEE KPIs results allows to vary virtual production facility parameters for optimizing the performance of the virtual production facility. In particular, said parameter is automatically corrected by the production facility modeler, or manually by a user, via said production facility modeler.

Eventually, the steps of simulating at least one working of the production facility from the virtual working of the virtual production facility, collecting at least one data related to said virtual working, and computing OEE KPIs from said data are iteratively performed one after the other in order to improve an efficiency of the virtual production facility, or, in order to reach targeted OEE KPIs results. The iteration might be commanded by a user, or, advantageously by the production facility modeler that is capable of varying parameters of the virtual production facility, either simply iteratively, or according to some predefined rules that might depend on the OEE KPIs results, that are for example transmitted by said means of computing. In other words, the production facility modeler is in particular capable of correcting at least one parameter of said virtual production facility in order to reach targeted OEE KPIs results or improve the efficiency of the virtual production facility.

Moreover, the system according to the invention is in particular characterized in that the means for computing OEE KPIs might be an existing OEE system. Indeed, the normal task of an OEE system is to compute performance KPIs by collecting data of a real production line. Basically, OEE system is capable of implementing three steps:
1. Data modeling: In this phase, the OEE system is set up with production facility information, such as equipment topology, target production speed of equipment, implementation of OEE KPIs.
2. Data acquisition: usually OEE system are capable to collect production facility data from sensors linkable to programmable logic controllers (PLC), but very often, they might be also capable of acquiring production facility data from different sources such as, for example, XML files. Generally, acquired data are stored in a relational database.
3. Data elaboration: once acquired, the data are elaborated in order to compute OEE KPIs, i.e. OEE, Availability, Quality and Performances, in particular for each equipment of the production facility, and eventually providing results aggregated by shift, team, or product code.

Consequently, an OEE system might be coupled to the collecting means for exchanging data, notably arising from the simulation of the production facility by means of the virtual production facility. In this case, the OEE system is capable of replacing the work done by the means for computing OEE KPIs. Or, said OEE system might be coupled directly to the production facility simulator in order to collect and compute OEE KPIs directly from said production facility simulator. Advantageously, the method allows a use of existing OEE system.

Finally, the method according to the invention might be used also as a method for designing a production facility, said method for designing comprising the above-mentioned steps of the method for improving the production facility. In particular, the method might be advantageously used for designing a production facility according to a result of computing OEE KPIs of the virtual production facility. Indeed, the OEE system is never used during a design phase of a production facility. It can only be used on real production facility. At the opposite, the present invention advantageously allows to simulate a production facility, and to use, during a design phase, the virtual production facility for testing parameters, i.e. any parameter that may modify the production facility and/or its efficiency, like the kind of equipments, equipments or production facility parameters/configurations, location of the equipment, and so on. It allows thus to imp improve the efficiency of a virtual production facility during a design phase, before building a real production facility according to the OEE KPIs results obtained with the virtual production facility.

The main issue of this invention is thus to use the production facility modeler together with a production facility simulator in order to provide synthesized production facility data, for example to an acquisition module of an existing OEE software, or to the means for computing OEE KPIs after collecting the simulation data related to the working of the virtual production facility. Said data, obtained by simulating the working of the production facility with a virtual production facility are thus directly used to calculate and estimate the production facility performance. Advantageously, simulated results allow to recognize performance problems, giving the opportunity to the production facility engineer to apply corrective actions to the simulated production facility, and to observe effects of said corrective actions on the working and performance of the virtual production facility rather than on a real production facility, saving costs and time.

The above describe features and advantages of the invention, as well as others, will become more readily apparent to those ordinary skilled in the art by reference to the following detailed description and accompanying drawings.

### Brief description of the drawings

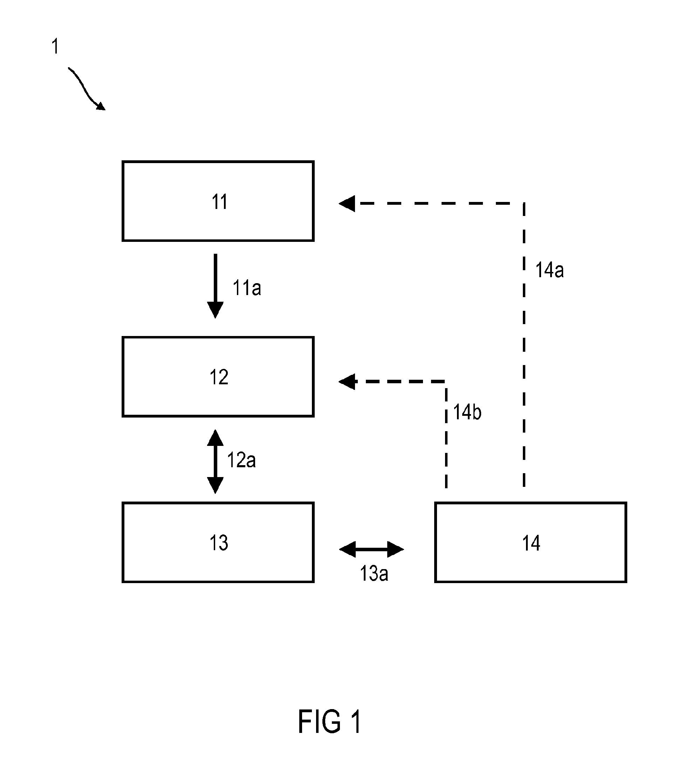

Figure 1 schematically shows a block diagram representing an example of embodiment of the invention.

### Detailed description

Figure 1 schematically represents an example of an embodiment of a system 1 for improving the efficiency of a production facility, the system comprising:
- a production facility modeler 11 designed for modeling said production facility into a virtual production facility;
- a production facility simulator 12 for simulating at least one working of the production facility from a virtual working of the virtual production facility;
- means for collecting 13 at least one data related to said virtual working, said means being in particular capable of working out said data in order to provide worked data compatible with an OEE system;
- means for computing 14 OEE KPIs from said data, said means for computing being in particular said OEE system.

In particular, the production facility modeler 11 is coupled by a first mean for coupling 11a to the production facility simulator 12 in order to provide information necessary for simulating the virtual production facility. Results of the simulation of the working of the virtual production facility are provided by the production facility simulator 12 to the means for collecting 13, notably by a second mean for coupling 12a that couples the means for collecting 13 and the production facility simulator 12. Collected data are then transmitted, or collected by the means for computing 14, via a third mean for coupling 13a. Eventually, if the simulation by the production facility simulator provides data compatible with an OEE system, said data might be directly collected by, or transmitted to, the means for computing 14 from the production facility simulator 12 by means of an eventual fourth coupling mean 14b.

In a particular case of an automation of the method according to the invention, computed OEE KPIs values might be in particular transmitted by the computing means 14 to the production facility modeler 11 by means of a connection 14a. In particular, said values are transmitted if a stored targeted OEE KPIs value has not been reached. Then, from received OEE KPIs values transmitted by the computing means 14, the production facility modeler 11 is advantageously capable of automatically modifying parameters of the virtual production facility for improving the efficiency of the virtual production facility in order to converge to said targeted value/result. For achieving the convergence to the targeted value/result, some rules might be stored in the production facility modeler 11. Said rules might be predefined by a user. Said rules are capable of teaching the production facility modeler 11, which parameters of the virtual production facility would have to be changed in order to reach said targeted value/result.

In particular, according to a manual or automatic process, the steps of
- simulating the working of the virtual production facility by means of said production facility simulator 12, together with the transmission to, or collection by, the means for collecting 13 of the data arising from said step of simulating, the working of the virtual production facility,
- the eventual working of said data so that they become compatible with the means for computing 14, or with an existing OEE system comprised in the means for computing 14,
- the computing of said data by the means for computing 14,
are iteratively done. At the end of each iteration or iterative process, at least one OEE KPI value is computed by said means for computing 14, and if said value reaches a targeted value or targeted range of values, i.e. if the performance of the virtual production facility is in an acceptable predefined range of performance, then, the iteration is stopped, either automatically, either by a user. If said value does not reach a targeted value or a targeted range of values, then, a user may command another iteration by modifying parameters of the virtual production facility, or in the case of the automation of the iteration, the production facility modeler 11 is capable of modifying at least one parameter of the virtual facility production in order to perform a next iteration, until a OEE KPI value reaches a targeted value or a range of targeted values. In particular, in the case of an automation of the iterative process, each iteration is commanded by the production facility modeler that is capable of deciding if the computed OEE KPI value reaches the targeted value or the range of targeted values, notably by comparing the obtained OEE KPI value with a stored targeted value or a stored range of targeted values.

Finally, the method and the system according to the invention have the following advantages:
- they allow to simulate different production facilities, for example it becomes possible to simulate from a same virtual production facility at least one different virtual production facility by modifying at least one virtual equipment of said same virtual production facility, in order to decide for the production facility with the best performances, before really building the real production facility, giving rise thus to time and cost savings;
- they allow a forecasting of equipments and working of a real production facility during a design phase;
- they allow to solve problems related to the working of a real production facility, like bottleneck, before they happen in the real production facility;
- they allow to increase a production efficiency of a real production facility, to lower its maintenance costs and to lower the corrections to be applied a posteriori on a real production facility, i.e. after that the production facility has been built according to results of the working of the virtual production facility.

## Claims

1. Method for improving the efficiency of a production facility, the method comprising the steps of
- modeling a production facility into a virtual production facility;
- simulating at least one working of the production facility from a virtual working of the virtual production facility;
- collecting at least one data related to said virtual working;
- computing at least one overall equipment effectiveness key performance indicator from said data.

2. Method according to claim 1, **characterized in that** an equipment of the production facility is modeled into a virtual equipment designed for being comprised in the virtual production facility.

3. Method according to one of the claims 1 or 2, **characterized by** simulating at least one working of said equipment from a virtual working of said virtual equipment.

4. Method according to one of the claims 1 to 3, **characterized by** collecting at least one data related to the virtual working of said virtual equipment.

5. Method according to one of the claims 1 to 4, **characterized by** working out said data for returning as output, worked data compatible with an existing overall equipment effectiveness system.

6. Method according to one of the claims 1 to 5, **characterized by** a correction of at least one parameter of the virtual production facility according to overall equipment effectiveness key performance indicators results.

7. Method according to one of the claims 1 to 6, **characterized by** a correction of at least one parameter of the virtual equipment according to overall equipment effectiveness key performance indicators results.

8. Method according to one of the claims 1 or 7, wherein the steps of simulating at least one working of the production facility from the virtual working of the virtual production facility, collecting at least one data related to said virtual working, and computing overall equipment effectiveness key performance indicators from said data are iteratively performed one after the other in order to improve an efficiency of the virtual production facility.

9. Method according to one of the claims 1 to 8, **characterized by** designing a production facility according to a result of computing overall equipment effectiveness key performance indicators of the virtual production facility.

10. System for improving the efficiency of a production facility, the system comprising:
- a production facility modeler (11) designed for modeling said production facility into a virtual production facility;
- a production facility simulator (12) for simulating at least one working of the production facility from a virtual working of the virtual production facility;
- means for collecting (13) at least one data related to said virtual working;
- means for computing (14) at least one overall equipment effectiveness key performance indicator from said data.

11. System according to claim 10, **characterized in that** the production facility modeler (11) is capable of modeling a production facility equipment into a virtual equipment of the virtual production facility.

12. System according to one of the claims 10 or 11, wherein the production facility simulator (12) is capable of simulating a working of a production facility equipment from a virtual working of said virtual equipment.

13. System according to one of the claims 10 to 12, wherein the means for collecting (13) are capable of collecting at least one data related to the virtual working of said virtual equipment.

14. System according to one of the claims 10 to 13, **characterized in that** the means for collecting (13) are capable of working out said data for returning, as output from said data, worked data compatible with an existing overall equipment effectiveness system.

15. System according to one of the claims 10 to 14, **characterized in that** the production facility modeler (11) is capable of correcting at least one parameter of said virtual production facility in order to reach targeted overall equipment effectiveness key performance indicators results.

16. System according to one of the claims 10 to 15, **characterized in that** the means for computing (14) overall equipment effectiveness key performance indicators are an existing overall equipment effectiveness system.
